# EUROPEAN PATENT SPECIFICATION

(11) **EP 2 557 744 B1**
(45) Date of publication and mention of the grant of the patent: **08.10.2014**
(21) Application number: 11006615.6
(22) Date of filing: 10.08.2011
(51) Int. Cl.: H04L 25/03

(54) **Method and apparatus for a hybrid SC-FDMA receiver**
Verfahren und Vorrichtung für einen Hybrid-SC-FDMA-Empfänger
Procédé et appareil pour récepteur SC-FDMA hybride

(43) Date of publication of application: 13.02.2013
(73) Proprietor: MIMOON GmbH, 47057 Duisburg (DE)
(72) Inventor: Chen, Ronald, 47057 Duisburg (DE)
(74) Representative: Eisenführ Speiser

(56) References cited:
- US-A1- 2009 238 240
- CHENGBING HE ET AL: "Research on bandwidth efficient underwater acoustic communications", TENCON 2010 - 2010 IEEE REGION 10 CONFERENCE, IEEE, PISCATAWAY, NJ, USA, 21 November 2010 (2010-11-21), pages 742-745, XP031898421, DOI: 10.1109/TENCON.2010.5686604 ISBN: 978-1-4244-6889-8
- KUDO R ET AL: "Coherent Optical Single Carrier Transmission Using Overlap Frequency Domain Equalization for Long-Haul Optical Systems", JOURNAL OF LIGHTWAVE TECHNOLOGY, IEEE SERVICE CENTER, NEW YORK, NY, US, vol. 27, no. 16, 15 August 2009 (2009-08-15), pages 3721-3728, XP011272236, ISSN: 0733-8724, DOI: 10.1109/JLT.2009.2024091

## Description

### FIELD OF THE INVENTION

The present invention relates to a method, apparatus and computer program product for receiving a single carrier frequency division multiple access (SC-FDMA) signal.

### BACKGROUND OF THE INVENTION

SC-FDMA is a promising technique for high data rate uplink communication and has been adopted by the 3^{rd} Generation Partnership Project (3GPP) for its next generation cellular system, called Long-Term Evolution (LTE). SC-FDMA is a modified form of orthogonal frequency division multiplexing (OFDM) with similar throughput performance and complexity. It is often viewed as DFT-coded OFDM where time-domain data symbols are transformed to frequency-domain by a discrete Fourier transform (DFT) before going through the standard OFDM modulation. Thus, SC-FDMA inherits all the advantages of OFDM over other well-known techniques such as time division multiple access (TDMA) and code division multiple access (CDMA). The major problem in extending TDMA and wideband CDMA to broadband systems is the increase in complexity faced by multipath signal reception. A main advantage of OFDM, as is for SC-FDMA, is its robustness against multipath signal propagation, which makes it suitable for broadband systems. SC-FDMA brings additional benefit of low peak-to-average power ratio (PAPR) compared to OFDM making it suitable for uplink transmission by user terminal devices.

SC-FDMA is a modulation scheme for the uplink direction from a terminal device (e.g. user equipment (UE)) to a base station device (e.g. enhanced nodeB or eNodeB or eNB) of a Long-Term Evolution (LTE) network. SC-FDMA leads to a single-carrier transmit signal and can be interpreted as a linearly precoded OFDMA scheme, in the sense that it has an additional DFT processing preceding the conventional OFDMA processing, so that a simple frequency domain equalization (FDE) can be employed to eliminate inter-symbol-interference (ISI) due to multipath channels (frequency selective fading channels).

In general, an equalizer attempts to unravel the ISI in the received signal to recover the transmitted symbols. It then outputs the bits associated with those symbols. The output may represent hard decisions on the bits or soft decisions. If the equalizer makes soft decisions, it outputs information relating to the probability of the bit being zero or one. If the equalizer makes hard decisions on the bits, it quantizes the soft bit decisions and outputs either a zero or a one. The equalization can be done in the time domain or in the frequency domain.

A frequency non-selective channel means that the signal over its entire bandwidth will have the same effect due to the multipath channel. This is also called flat fading. In the time domain, the channel is not dispersive relative to its symbol time, and hence, there is no ISI. In a frequency selective channel, the signal will have independent effects over its bandwidth due to the channel, and it is time dispersive relative to its symbol time. In traditional systems the symbol detection is on the samples at either symbol or chip rate, and it cares about the carrier-to-interference level only at the sampling points. But, OFDM symbol detection requires that the entire symbol duration be free of interference from its previous symbols. Even though OFDM symbol duration is much larger than channel dispersion, even a small amount of channel dispersion causes some spilling of each OFDM symbol to the next symbol, thus it causes some ISI. However this ISI spill-over is limited to only the initial part of the neighboring symbol. Hence this ISI spill-over at the beginning of each symbol can easily be removed by adding a cyclic prefix to each transmit symbol. Cyclic prefix is the process of extending each symbol by duplicating a portion of the signal at the symbol ends, which is thrown away at the receiver. The amount of symbol extension, i.e. length of cyclic prefixes, is a system design parameter, and it is based on the expected signal dispersion in the environment of system operation.

Even though FDE is the promising technique for SC-FDMA receiver, SC-FDMA is still a single-carrier system and time domain equalization (TDE) together with decision feedback equalization (DFE) is the natural way to implement the receiver for single-carrier systems, especially under flat-fading channel conditions (with small channel delay spread or bandwidth allocated to one user is small). The worst case of SC-FDMA receiver (LTE eNodeB receiver) is not the case that one single user has the maximum TB size but the case that has many users and each user has one small TB size. In the worst case, the channels for the small sub-band of each user is usually flat fading or pseudo-flat fading, so the TDE could be used for the worst case with reduced computing complexity and better performance under low signal-to-noise ration (SNR).

FDE is the preferred technique for SC-FDMA receiver. Furthermore, simplified iterative FDE and turbo FDE can be employed to improve the performance of SC-FDMA receiver. When iterative FDE is used, the equalization is performed in frequency domain (before inverse DFT (IDFT)), and then the signal is decoded in time domain (after IDFT), and after that the decoded signal is fed back into frequency domain (transformed by DFT). Thus, turbo FDE is a very big loop which includes DFT and IDFT. However, in order to do soft interference cancellation (SIC) in iterative receiver, the mean value and variance of symbols (soft symbols) are needed. The soft symbols only can be calculated in time-domain, while frequency-domain symbols are needed for FDE. Here, transformation of time-domain variance into frequency-domain is a problem. Conventionally, an accumulation of time-domain variance is used as the frequency-domain variance, which is a rough estimate and thus disadvantageous, since performance of an iterative receiver is sensitive to the variance of soft symbols.

The US 2009/0238240 A1 discloses a single-carrier burst structure for decision feedback equalization and tracking, wherein a special format is employed for transmitting data blocks which allows parallel equalizations at receiver. By applying parallel equalization operations, a clock of the receiver can operate at a fraction of the input signals data right, which is more practical in the case of very high data rates while power dissipation is also reduced. Frequency domain equalization maybe applied at the receiver when the wireless channel has substantial number of parts. In this case, the channel maybe divided into flat-fading frequency subcomponents that can be equalized independently with lower computational complexity than the computational complexity of time domain equalization. On the other hand, time domain equalization maybe more appropriate for environments with a smaller number of channel parts in order to reduce computational complexity and power dissipation of receiver processing.

### SUMMARY

It is an object of the present invention to provide an SC-FDMA receiver and receiving method with enhanced performance.

This object is achieved by a method as claimed in claim 1.

Additionally, the above object is achieved by an apparatus as claimed in claim 10.

Accordingly, a hybrid receiver or receiving method is proposed as a combination of time domain equalization and frequency domain equalization. It can be switched between FDE and TDE based on different channel conditions and system configurations to reduce the computing complexity and provide promising performance.

According to the proposed iterative aspect, FDE and TDE can be selected in the same way as in the non-iterative aspect. Furthermore, if one user is experiencing pseudo-flat fading channels (channel is frequency-selective fading but channel delay spread is small), TDE can still be selected to reduce computing complexity of the iterative aspect, since turbo FDE including IDFT and DFT has more computing complexity than turbo TDE. Furthermore, according to the iterative aspect, if TDE is selected, FDE can be executed in a first iteration and TDE shall be executed in other iterations, which can increase the convergence rate of the iterative receiver or receiving method. Thus, the proposed hybrid iterative receiver or receiving method can be a combination of turbo FDE and turbo TDE so that an SC-FDMA receiving operation with better performance and less computing complexity an be achieved. If time domain equalizing is selected, frequency domain equalizing may be executed in the first iteration and time domain equalization is executed in other iterations. The delay spread of channels and SNR can be estimated, where the coherent bandwidth is approximately the inverse of the delay spread. If the allocated band width of one user is less than coherent bandwidth, turbo TDE can be used, while otherwise, turbo FDE is used.

The difference between a turbo equalizer and a standard equalizer is the feedback loop from the decoder to the equalizer. Due to the structure of the code, the decoder not only estimates the received information bits, but also discovers new information about the coded bits. The decoder is therefore able to output extrinsic information about the likelihood that a certain code bit stream was transmitted. Extrinsic information is new information that is not derived from information input to the block. This extrinsic information is then mapped back into information about the transmitted symbols for use in the equalizer. These extrinsic symbol likelihoods are fed into the equalizer as a priori symbol probabilities. The equalizer uses this a priori information as well as the input signal to estimate extrinsic probability information about the transmitted symbols. The a priori information fed to the equalizer is initialized to zero, meaning that the initial estimate made by the turbo equalizer is identical to the estimate made by the standard receiver. The information x̂ is then mapped back into information about for use by the decoder. The turbo equalizer repeats this iterative process until a stopping criterion is reached.

The loop of turbo FDE is bigger than the loop of turbo TDE. When channels are flat-fading or the subband allocated to one user is less than the coherent bandwidth, the turbo TDE with smaller loop can be used and computing complexity can be reduced. The worst case for an SC-FDMA receiver (as provided e.g. in an eNodeB of an LTE system) is not the one-user case with the maximum transport block (TB) size, but the case that many users are faced and each user has a small TB size. When one user has a small TB size and a small bandwidth is allocated to that user, the subband signal of that user undergoes flat-fading channels, so that turbo TDE can be used and computing complexity for the worst case can be reduced. When the delay-spread of channel is big and subband of one user is under frequency-selective channel conditions, turbo FDE should be used and the total computing complexity can be reduced. If the allocated bandwidth for one user is smaller than the coherent bandwidth and SNR is low, TDE can provide better performance than FDE.

Hence, the proposed hybrid SC-FDMA receiver is switched between turbo TDE receiver and turbo FDE receiver based on channel conditions and system configurations. The combination of turbo TDE and turbo FDE techniques will not increase any hardware resource utilization except some extra instruction memory, e.g., on a software defined radio (SDR) platform.

Under some channel conditions, the iterative TDE receiver is simpler than iterative FDE receiver and provides better performance. When the number of resource blocks allocated to one user is small, the channels during the subband of that user can be regarded as flat-fading channels, so that switching to iterative TDE will lead to a simpler receiving operation for SC-FDMA.

In a first more specific exemplary implementation of the proposed solution, the at least one predefined criterion may comprise as first criterion a flat fading channel and as second criterion a signal-to-noise ratio below a predefined threshold, wherein time domain equalization may be selected when the first and second criteria are met, and wherein frequency domain equalization is selected when at least the first criterion is not met.

In a second more specific exemplary implementation which can be combined with the first more specific exemplary implementation, the estimated channel condition may comprise a delay spread and signal-to-noise ratio of the channel.

In a third more specific exemplary implementation which can be combined with the first or second more specific exemplary implementations, a flat-fading channel criterion may be considered to be met when the inverse of the estimated delay spread is less than a subband of one user.

In time domain equalizing is selected, frequency domain equalizing may be executed in the first iteration and time domain equalization is executed in other iterations.

In a fourth more specific exemplary implementation which can be combined with any one of the first to third more specific exemplary implementations, decision feedback of turbo frequency domain equalization may be used to update the estimation in the estimation step. Furthermore, the decision feedback can be used to mitigate residual interference after the frequency domain equalization.

In a fifth more specific exemplary implementation which can be combined with any one of the first to fourth more specific exemplary implementations, the SC-FDMA signal may be received via a multi-user multi-input multi-output, MIMO, arrangement and a MIMO detector may be used for performing selective time domain or frequency domain equalization.

The above apparatus may be implemented as a hardware circuit integrated on a single chip or chip set, or wired on a circuit board. As an alternative, at least parts of the apparatus may be implemented as a software program or routine controlling a processor or computer device. As an example, the software program or routine may be implemented in C type programming language.

Other advantageous modifications are defined in the dependent claims.

### BRIEF DESCRIPTION OF THE DRAWINGS

The invention will now be described in greater detail based on embodiments with reference to the accompanying drawings in which:
Fig. 1 shows a schematic block diagram of a hybrid SC-FDMA receiver according to a first embodiment;
Fig. 2 shows a flow diagram of a hybrid SC-FDMA receiving procedure according to a second embodiment;
Fig. 3 shows a schematic block diagram of a hybrid SC-FDMA receiver in SISO mode according to a third embodiment when turbo FDE is used;
Fig. 4 shows a schematic block diagram of a hybrid SC-FDMA receiver in SISO mode according to the third embodiment when turbo TDE is used;
Fig. 5 shows a schematic block diagram of a hybrid SC-FDMA receiver in MIMO mode according to a fourth embodiment when turbo FDE is used;
Fig. 6 shows a schematic block diagram of a hybrid SC-FDMA receiver in MIMO mode according to the fourth embodiment when turbo TDE is used; and
Fig. 7 shows a schematic block diagram of software-based implementation according to a fifth embodiment.

### DESCRIPTION OF THE EMBODIMENTS

In the following, embodiments of the present invention will be described based on an implementation of an SC-FDMA receiver for an LTE network. However, it is to be noted that the present invention can be applied in various other types of cellular or wireless access networks where SC-FDMA receivers are used.

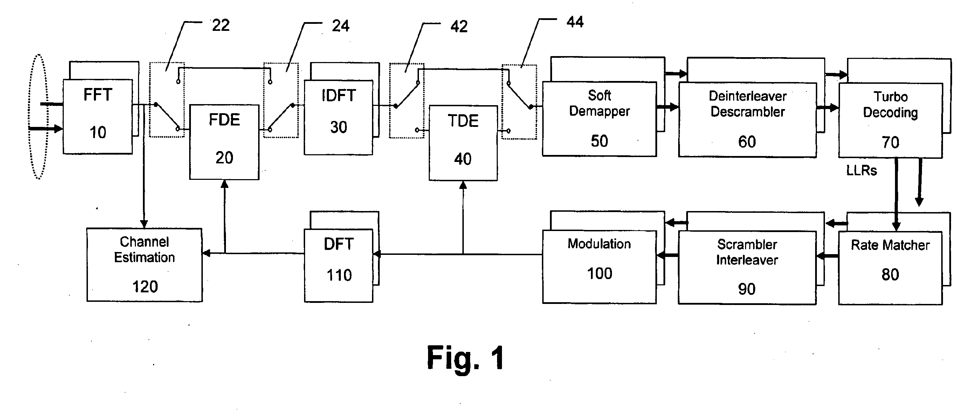

Fig. 1 shows a schematic block diagram of an SC-FDMA receiver according to a first embodiment which may be provided in an access device, such as an eNB.

The SC-FDMA receiver of Fig. 1 is configured as an iterative receiver which can be switched by switching elements 22, 24, 42 and 44 between frequency domain equalization (FDE) and time domain equalization (TDE) based on channel conditions (as detected e.g. by a channel estimation module 120) and bandwidth allocated to one user. Thus, in order to select FDE and TDE dynamically by the switching elements 22, 24, 42 and 42 in the SC-FDMA receiver, channel delay spread and SNR can be estimated in the channel estimation module 120.

When the delay spread of the channels is small or the channel is a flat-fading channel, the switching elements can be controlled to switch a TDE module 40 into the processing path and to bypass an FDE module 20. Otherwise, the FDE module 20 is used and the TDE module 40 is bypassed. Furthermore, when the bandwidth allocated to one user is small and the channels during that small subband of one user can be regarded as flat-fading channels, the TDE module 40 is used. The FDE module 20 may by configured as a single-tap equalizer (where equalization is achieved by a single (complex) multiplication per subcarrier), and the TDE module 40 may be configured a single-tap equalizer or multi-tap equalizer.

As can be gathered from Fig. 1, when turbo FDE with feedback loop is used, the big loop iteration includes the FDE module 20, an inverse digital Fourier transformation (IDFT) module 30, a soft demapper module 50, a channel deinterleaver and descrambler module 60, turbo rate-dematcher and turbo decoder module 70 which outputs likelihood ratios (LLRs) to a rate-matcher module 80 followed by a scrambler and channel interleaver module 90, a modulation module 100 and a digital Fourier transformation (DFT) module 110. On the other hand, when turbo TDE with feedback loop is used, the loop is smaller, where the IDFT module 30 and the DFT module 110 can be eliminated. In the first iteration, a fast Fourier transformation (FFT) module 10 and the IDFT module 30 are only used to separate the signal for different users, and signal detection and channel decoding as well as the other processing steps are all performed in the time-domain. The proposed hybrid iterative receiver according can also be used for multi-user collaborative multiple-input multiple-output (MIMO) receiver architectures if the FDE and TDE modules 20, 40 are replaced by a MIMO detector. If turbo TDE is then selected, FDE can be executed in the first iterations to get better feedback information and TDE can be executed in the other iterations, which can speed the convergence rate of turbo TDE. Further details concerning the function of the individual blocks of Fig.1 can be gathered from Hyung G. Myung, Junsung Lim, and David J. Goodman, "Single Carrier FDMA for Uplink Wireless Transmission." IEEE Vehicular Technology, Sept 2006, or from the corresponding 3GPP specifications TS 36.211-36.213 or 36.300.

The delay spread D of the transmission channel is estimated in the channel estimation module 120, wherein the coherent bandwidth is approximately 1/D. Assuming N resource blocks are allocated to one user (each resource block includes 12 subcarriers and the bandwidth of each subcarrier is 15KHz), then the bandwidth to one user is N*12*15000Hz. If N*12*15000 < 1/D, the signal of that user experiences a flag-fading channel and TDE is used. For example, the delay spread is usually less than 0.2 ms in open areas, so that the coherent bandwidth is 5MHz and TDE can be used when the number of allocated resource blocks is less than 28. In suburban areas, the delay spread is about 0.5 ms and the coherent bandwidth is 2MHz, so that TDE is used when the number of allocated resource blocks is less than 12. In urban areas, the delay spread is about 3 ms and coherent bandwidth is 333KHz, so that TDE is used when the number of allocated resource blocks is less than 2.

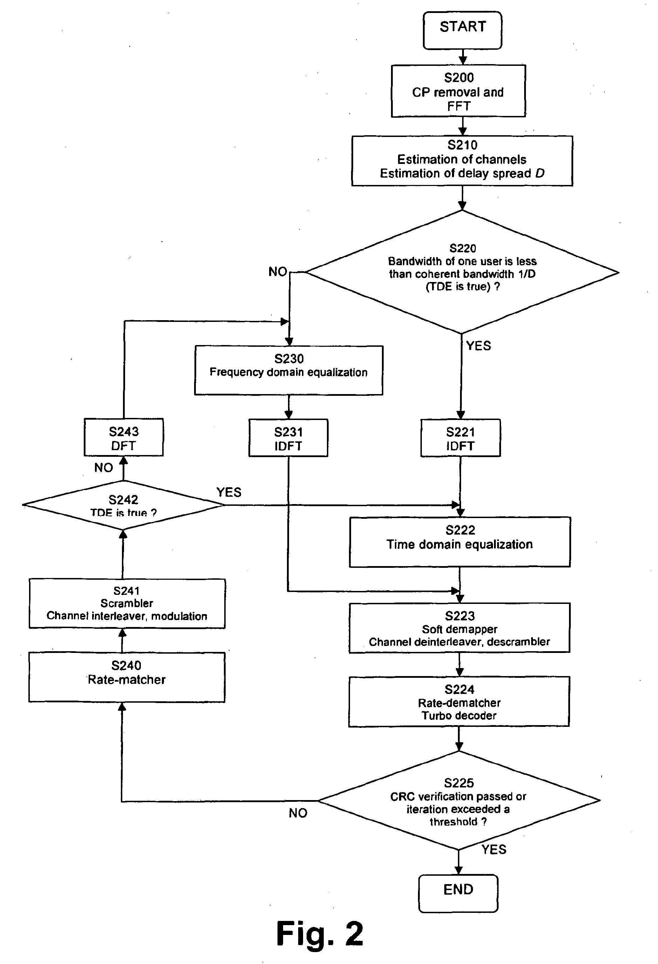

Fig. 2 shows a flow diagram of a hybrid iterative SC-FDMA receiving procedure according to a second embodiment. In step S200, the cyclic prefix (CP) is removed and an FFT processing is applied to the received SC-FDMA signal. Then, in step S220, channels and delay spread D are estimated. Based on the estimated delay spread D, it is checked in step S220 whether the bandwidth of one user is less then the coherent bandwidth (calculated as *1*/*D*). If this is the case (i.e. TDE is true), an IDFT processing is applied in step S221 and then the received signal is subjected to TDE processing in step S222. Thereafter, in step S223, soft demapping, channel deinterleaving and descrambling are performed, and then in step S224 rate-dematching and turbo decoding. Finally, in step S225, it is checked whether a cyclic redundancy code (CRC) verification is passed or whether the number of iterations exceeded a predefined threshold. If so, the received data is assumed to be correctly decoded.

If it is determined in step S220 that TDE is not true (i.e. the bandwidth of no user is less then the coherent bandwidth), the procedure branches to step S230 and the signal is subjected to an FDE processing followed by IDFT in step S231. Then, the procedure continues with the above mentioned step S223.

If it is determined in step S225 that CRC verification is not passed and the iteration threshold has not been exceeded, the procedure branches to a new iteration and proceeds to step S240 where rate-matching is applied. Then, scrambling, channel interleaving and modulation is applied in step S241. Then, it is checked again in step S242 whether TDE is true (i.e. bandwidth of one user is less then the coherent bandwidth). If so, the procedure jumps to the previous step S222 and proceeds with TDE processing. If it is determined in step S242 that TDE is not true, a DFT processing is applied in step S243 and then the signal is subjected to the FDE processing in step S230. After this, an IDFT processing is applied in step S231 and the procedure continues with soft demapping, channel deinterleaving and descrambling in the above mentioned step S223.

In the following, selective TDE and FDE processing block diagrams are described for different receiver modes, wherein modules or blocks with same reference numbers corresponds to those modules or blocks of Fig. 1 and are not explained again.

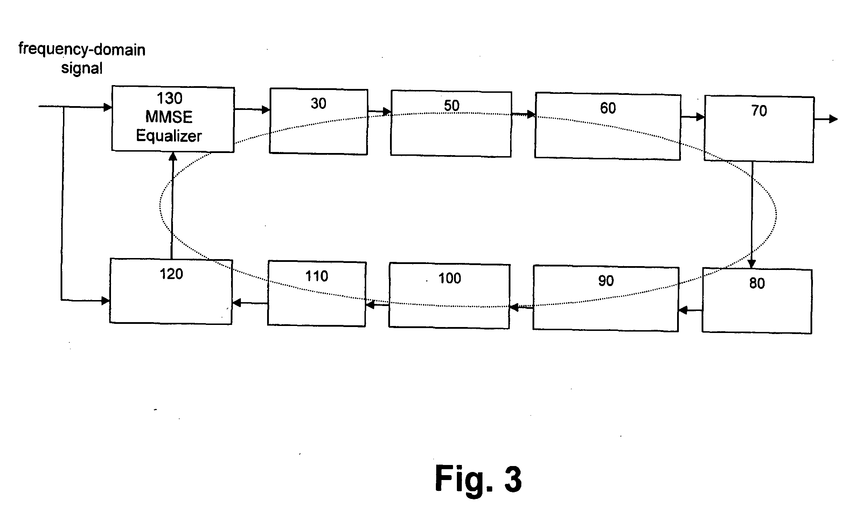

Fig. 3 shows a schematic block diagram of a hybrid SC-FDMA receiver in single-input single-output (SISO mode) according to a third embodiment in a case where turbo FDE is selected. The modules or blocks of Fig. 3 In the SISO mode, the receiver receives the SC-FDMA signal via a single input (e.g. single receiving antenna) and generates a single output. In the SISO mode, the decision feedback of turbo FDE loop (indicated by the dotted line in Fig. 3) is used to update the channel estimation at the channel estimation module 120. Channel estimation and equalization are performed in the frequency domain, the other processing shall be performed in time domain. Here, a minimum mean square error (MMSE) equalizer module 130 is controlled to perform FDE in the turbo loop.

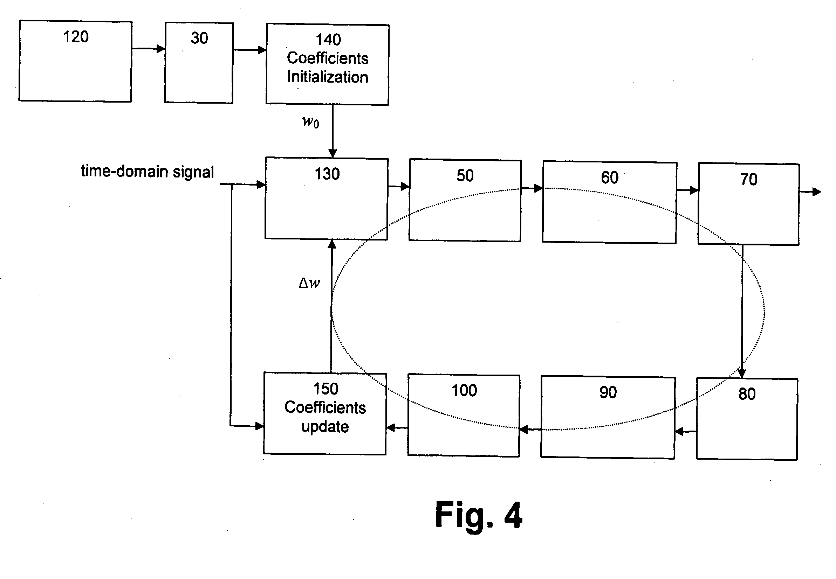

Fig. 4 shows a schematic block diagram of the hybrid SC-FDMA receiver in SISO mode according to the third embodiment in a case where turbo TDE is selected. If turbo TDE is used in SISO mode, in the first iteration, DFT and IDFT are only used to separate the signal for different users, wherein the time-domain channels are needed to calculate the initial filter coefficients w0 in a coefficient initialization module 140. If one user occupies N continuous subcarriers and frequency domain channel estimation for that user can be written as [*H*₀,*H*₁,...,*H*_{*N*-1}], than the initial filter coefficients vector w0 can be calculated by performing IFFT operation on verctor [1/*H*₀,1/*H*₁,...,1/*H*_{*N*-1}]. Apparently, if flat channels are experienced by that user, w0 equals [1/*H*₀,0,...,0]. Furthermore, if an adaptive filter like least mean square (LMS) or root mean square (RLS) is used as equalizer 130, the initial filter coefficients w0 can be calculated by the the channel estimation module 120 or trained by time-domain reference signal by using adatpive filter algorithm like LMS or RLS. Except the first iteration, all processing steps are performed in time domain, the decision feedback information is used to adjust the coefficients of the adaptive filter of the MMSE equalizer 130 by a coefficients update module 150 which supplies coefficient updates Δ*w* to the MMSE equalizer 130. If an LMS adaptive filter algorithm is used, the filter coefficients can be updated by Δ*w* =*µ**eₖ*xₖ (0<µ<1). The equalized output is **x**ₖ=w*_{old}****y**ₖ and the error between expectation and equalized output is **e**ₖ = **b**ₖ - **x**ₖ. The filter coefficients can be updated as w_{new}=w_{old}+Δ*w*. If the signal undergoes flat-fading channel, a single-tap equalizer can also be used as equalizer 130 in TDE. Optionally, a multiple-tap equalizer can be used to improve performance but leads to more computing complexity. In iterative receiver, the TDE is composed of forward filter and backward filter. The forward coefficients are vector w calculated by the mentioned algorithm. The backward coefficients are vector [0,*h*1,*h*2,...,*h*_{*L*-1}], which actually comes from the time domain channel vector [*h*₀,*h*1,*h*2,...,*h*_{*L*-1}] by setting the first channel to be zero. Time domain channel vector [*h*₀,*h*1,*h*2,...,*h*_{*L*-1}] can be calculated by performing IFFT operation on frequency-domain channel vector [*H*₀,*H*₁,...,*H*_{*N*-1}].

Even if the channels are not flat, TDE can be selected and single-tap forward FIR can be used. That means the forward FIR coefficients are [1/*H*₀,0,...,0] and the backward FIR coefficients are [0,*h*1,*h*2,...,*h*_{*L*-1}], where *L* is the maximum channel delay of frequency-selective channels. In that case, FDE can be performed in the first iteration to speed the convergence rate. The predefined criterion is that maximum channel delay L is less than log₂*N* and the hybrid interative receiver can achieve the same performance as pure FDE interative receiver with less computing complexity, that because the computing complexity of backward FIR is much less than IDFT/DFT if L is less than log₂*N*

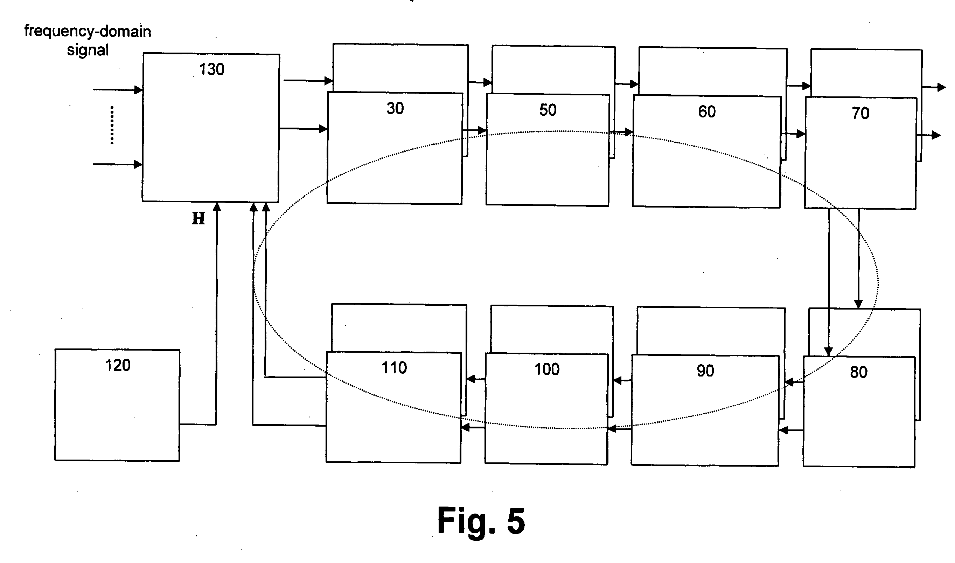

Fig. 5 shows a schematic block diagram of a hybrid SC-FDMA receiver in MIMO mode according to a fourth embodiment in a case where turbo FDE is used. The MIMO mode is indicted by the second row of modules and the multiple input and multiple output configuration of the receiver.

If the reference signal for one user is X at transmitter side and the received reference signal at receiver side is Y. The frequency domain channels H can be calucate by Y/X, furthermore, the noise can be reduced by FIR filter or FFT-windowing algorithm.

If multi-user collaborative MIMO is supported, the MMSE equalizer 130 should be an MMSE MIMO detector instead of a frequency-domain single-tap equalizer. Here, the feedback information is not only able to update channel estimation, but also used to mitigate the residual interference after the MMSE MIMO detector.

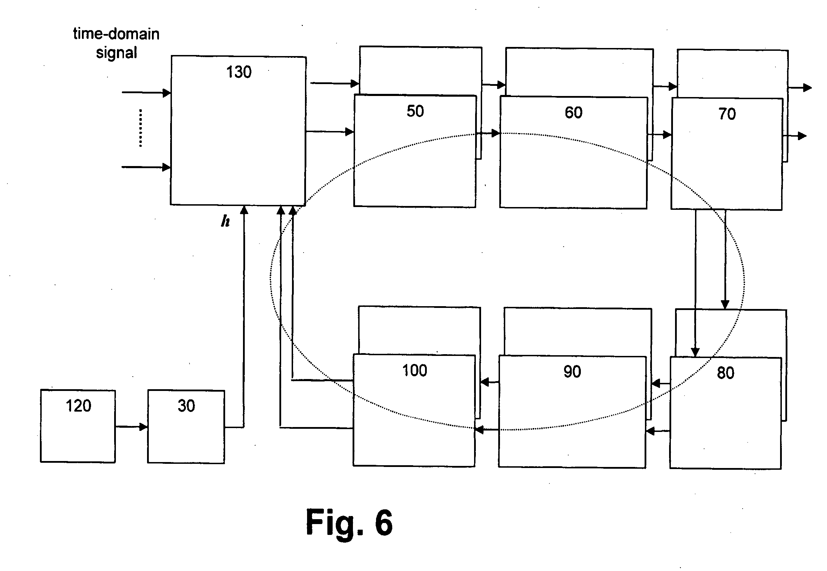

Fig. 6 shows a schematic block diagram of the hybrid SC-FDMA receiver in MIMO mode according to the fourth embodiment in a case where turbo TDE is used.The time-domain channels h can be calculated by calculating the FFT operation of frequency domain channels H.

If turbo TDE is used in the multi-user collaborative MIMO mode, the MMSE equalizer 130 should be an MMSE MIMO detector instead of a time-domain filter. Furthermore, DFT and IDFT are not included in the loop interaction.

Based on channel conditions, the SC-FDMA receiver is switched between turbo FDE and turbo TDE to achieve better performance and lower computing complexity. FDE and TDE operation can be selected dynamically based on at least one of channel conditions, SNR and system configuration. In a non-iterative receiver, either FDE or TDE is used to achieve better block error rate (BER) performance under particular scenarios. In an iterative receiver, either FDE or TDE is executed to reduce complexity and improve BER performance, or both can be combined, which means that FDE is selected in the first iteration and TDE is selected in the other iterations, which can increase the convergence rate of iterative receiver.

The proposed hybrid iterative receiver will not increase any hardware resource utilization except some extra instruction memory on software defined radio (SDR) platform.

It is noted that the modules or blocks 10, 20, 22, 24, 30, 40, 42, 44, 50, 60, 70, 80, 90, 100, 110, 120, 130, 140 and 150 of the hybrid receivers of Figs. 2 to 6 may be implemented as discrete signal processing circuits or, alternatively, as threads or software routines.

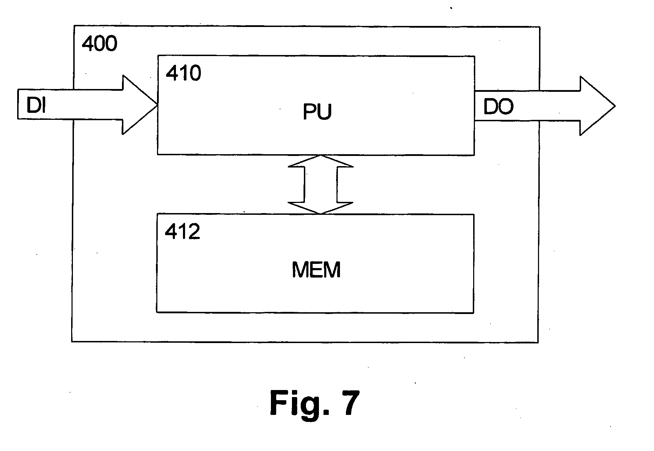

Fig. 7 shows a schematic block diagram of an alternative software-based implementation according to a third embodiment. The required functionalities can be implemented in a baseband subsystem 400 of an eNB with a processing unit 410, which may be any processor or computer device with a control unit which performs control based on software routines of a control program stored in a memory 412. The control program may also be stored separately on a computer-readable medium. Program code instructions are fetched from the memory 412 and are loaded to the control unit of the processing unit 410 in order to perform the processing steps described in connection with of Fig. 2, which may be implemented as the above mentioned software routines. The processing steps may be performed on the basis of input data DI and may generate output data DO. In case of the proposed scheduler, the input data DI may correspond to the received SC-FDMA signal(s), and the output data DO may correspond to the receiver output data.

Consequently, the functionalities of the above embodiments may be implemented as a computer program product comprising code means for generating each individual step of the frame alignment procedure when run on a computer device or data processor of the respective entity.

In summary, a hybrid receiver or receiving method have been described, in which TDE and FDE are used in combination. It can be switched between FDE and TDE based on different channel conditions and system configurations to reduce the computing complexity and provide better performance.

It is apparent that the invention can easily be extended to SC-FDMA receivers of any access device and system and is not restricted to LTE networks. The proposed embodiments can thus be implemented in connection with any base station or access device for receiving SC-FDMA signals of other communication networks. The embodiments may thus vary within the scope of the attached claims.

## Claims

1. A method of receiving a single carrier frequency division multiple access signal, said method comprising:
a. estimating (S210) a channel condition of a transmission link through which said single carrier frequency division multiple access signal is received;
b. checking (S220) whether the estimated channel condition meets at least a predefined criterion;
c. selecting (S220) one of time domain equalization and frequency domain equalization based on the result of said checking step; and
d. applying (S222, S230) the selected type of equalization to said received single carrier frequency division multiple access signal during the receiving operation.
e. wherein said applying step is performed it-eratively until error verification is passed or the number of iterations has exceeded a predefined threshold;
f. wherein, if time domain equalizing is selected, frequency domain equalization is executed in the first iteration and time domain equalization is executed in other iterations.

2. The method according to claim 1, wherein said time domain and frequency domain equalizations are turbo equalization techniques.

3. The method according to claim 1 or 2, wherein said at least one predefined criterion comprises as first criterion a flat fading channel and as second criterion a signal-to-noise ratio below a predefined threshold, wherein time domain equalization is selected when said first and second criteria are met, and wherein frequency domain equalization is selected when at least said first criterion is not met.

4. The method according to claim 3, wherein said estimating of said channel condition comprises estimating a delay spread and signal-to-noise ratio of the channel.

5. The method according to claim 4, wherein a flat-fading channel criterion is considered to be met when the inverse of said estimated delay spread is less than a subband of one user.

6. The method according to claim 1, further comprising using a decision feedback of a turbo frequency domain equalization to update the estimation in said estimation step.

7. The method according to claim 6, further comprising using said decision feedback to mitigate residual interference after said frequency domain equalization.

8. The method according to any one of the preceding claims, further comprising using a single-tap equalizer for said frequency domain equalization.

9. The method according to any one of the preceding claims, further comprising receiving said single carrier frequency division multiple access via a multi-user multi-input multi-output, MIMO, arrangement and using a MIMO detector for performing selective time domain or frequency domain equalization.

10. An apparatus for receiving a single carrier frequency division multiple access signal, the apparatus comprising:
a. channel estimation means (120) for estimating a channel condition of a transmission link through which said single carrier frequency division multiple access signal is received;
b. checking means (120) for checking whether the estimated channel condition meets at least a predefined criterion;
c. switching means (22, 24, 42, 44) for selecting one of time domain equalization and frequency domain equalization in response to an output of said checking means (120); and
d. equalizing means (20, 40; 130) for applying the selected type of equalization to said received single carrier frequency division multiple access signal during the receiving operation;
e. wherein said apparatus is adapted to perform said applying iteratively untile error verification is passed or the number of iterations has exceeded a predefined threshold, and
f. wherein, if time domain equalizing is selected by said switching means (22, 24, 42, 44), frequency domain equalization is executed by said equalizing means (20, 40; 130) in the first iteration and time domain equalization is executed by said equalizing means (20, 40; 130) in other iterations.

11. The apparatus according to claim 10, wherein said apparatus is arranged as a multiple-input multiple output, MIMO, receiver.

12. The apparatus according to claim 10 or 11, wherein said equalizing means comprises a MIMO detector (130).

13. A network access device comprising an apparatus according to any one of claims 10 to 12.

14. A computer program product comprising code means for producing the steps of method claim 1 when run on a computer device.

## Patentansprüche

1. Verfahren zum Empfangen eines Einzelträger-Frequenzmultiplex-Zugangssignals, wobei das Verfahren umfasst:
a. Schätzen (S210) eines Kanalzustands einer Übertragungsverbindung, über die das Einzelträger-Frequenzmultiplex-Zugangssignal empfangen wird;
b. Prüfen (S220), ob der geschätzte Kanalzustand zumindest ein vorbestimmtes Kriterium erfüllt;
c. Auswählen einer Zeitbereichsausgleichung oder einer Frequenzbereichsausgleichung basierend auf dem Ergebnis des Prüfschrittes; und
d. Anwenden (S222, S230) des gewählten Ausgleichungstyps auf das empfangene Einzelträger-Frequenzmultiplex-Zugangssignal während der Empfangsoperation;
e. wobei das Anwenden iterativ erfolgt, bis eine Fehlerverifikation bestanden ist oder die Anzahl von Iterationen einen vorbestimmten Schwellwert überschritten hat;
f. wobei, falls die Zeitbereichsausgleichung gewählt ist, die Frequenzbereichsausgleichung in der ersten Iteration und die Zeitbereichsausgleichung in weiteren Iterationen durchgeführt wird.

2. Verfahren nach Anspruch 1, wobei die Zeitbereichs- und Frequenzbereichsausgleichungen Turboausgleichstechniken sind.

3. Verfahren nach Anspruch 1 oder 2, wobei das zumindest eine vorbestimmte Kriterium als erstes Kriterium einen Kanal mit flachem Schwund und als zweites Kriterium ein Signal-Rausch-Verhältnis unterhalb eines vorbestimmten Schwellwerts umfasst, wobei die Zeitbereichsausgleichung gewählt wird, wenn das erste und das zweite Kriterium erfüllt sind, und wobei die Frequenzbereichsausgleichung ausgewählt wird, wenn zumindest das erste Kriterium nicht erfüllt ist.

4. Verfahren nach Anspruch 3, wobei das Schätzen des Kanalzustands ein Schätzen einer Verzögerungsspreizung und eines Signal-Rausch-Verhältnisses des Kanals umfasst.

5. Verfahren nach Anspruch 4, wobei ein Kriterium eines Kanals mit flachem Schwund als erfüllt erachtet wird, wenn das Inverse der geschätzten Verzögerungsspreizung kleiner ist als ein Unterband eines Benutzers.

6. Verfahren nach Anspruch 1, des Weiteren umfassend Verwenden einer Entscheidungsrückkopplung einer Turbofrequenzbereichsausgleichung zum Aktualisieren der Schätzung in dem Schätzschritt.

7. Verfahren nach Anspruch 6, des Weiteren umfassend Verwenden der Entscheidungsrückkopplung zur Abschwächung einer Restinterferenz nach der Frequenzbereichsausgleichung.

8. Verfahren nach einem der vorhergehenden Ansprüche, des Weiteren umfassend Verwenden eines Single-Tap-Equalizers für die Frequenzbereichsausgleichung.

9. Verfahren nach einem der vorhergehenden Ansprüche, des Weiteren umfassend Empfangen des Einzelträger-Frequenzmultiplex-Zugangssignals über eine Mehrfachbenutzer-Mehrfacheingang-Mehrfachausgang-, MIMO, Anordnung und Verwenden eines MIMO-Detektors zum Durchführen einer selektiven Zeitbereichs-oder Frequenzbereichsausgleichung.

10. Vorrichtung zum Empfangen eines Einzelträger-Frequenzmultiplex-Zugangssignals, wobei die Vorrichtung umfasst:
a. eine Kanalschätzeinrichtung (120) zum Schätzen eines Kanalzustands einer Übertragungsverbindung, über die das Einzelträger-Frequenzmultiplex-Zugangssignal empfangen wird;
b. einer Prüfeinrichtung (120) zum Prüfen, ob der geschätzte Kanalzustand zumindest ein vorbestimmtes Kriterium erfüllt;
c. eine Schalteinrichtung (22, 24, 42, 44) zum Auswählen einer Zeitbereichsausgleichung oder einer Frequenzbereichsausgleichung im Ansprechen auf eine Ausgabe der Prüfeinrichtung (120); und
d. eine Ausgleichseinrichtung (20, 40; 130) zum Anwenden des gewählten Typs der Ausgleichung für das empfangene Einzelträger-Frequenzmultiplex-Zugangssignal während der Empfangsoperation;
e. wobei die Vorrichtung ausgestaltet ist zum iterativen Durchführen des Anwendens, bis eine Fehlerverifizierung erfüllt ist oder die Anzahl von Iterationen einen vorbestimmten Schwellwert überschritten hat, und
f. wobei im Falle des Wählens einer Zeitbereichsausgleichung durch die Schalteinrichtung (22, 24, 42, 44) eine Frequenzbereichsausgleichung durch die Ausgleichungseinrichtung (20, 40; 130) in der ersten Iteration und eine Zeitbereichsausgleichung durch die Ausgleichseinrichtung (20, 40; 130) in weiteren Iterationen durchgeführt wird.

11. Vorrichtung nach Anspruch 10, wobei die Vorrichtung als ein Mehrfacheingang-Mehrfachausgang, MIMO, -Empfänger ausgestaltet ist.

12. Vorrichtung nach Anspruch 10 oder 11, wobei die Ausgleichseinrichtung einen MIMO-Detektor (130) umfasst.

13. Netzzugangsgerät mit einer Vorrichtung nach einem der Ansprüche 10 bis 12.

14. Computerprogrammprodukt mit Codemitteln zum Erzeugen der Schritte des Verfahrensanspruchs 1 bei dessen Ausführung auf einer Computervorrichtung.

## Revendications

1. Procédé de réception d'un signal d'accès en porteuse unique avec multiplexage en fréquence, le procédé comprenant :
a. l'estimation (S210) d'un état de canal d'une liaison de transmission, par laquelle le signal d'accès en porteuse unique avec multiplexage en fréquence est reçu ;
b. le contrôle (S220) du point de savoir si l'état estimé du canal satisfait au moins à un critère défini à l'avance ;
c. la sélection (S220) de l'une d'une égalisation dans le domaine temporel et d'une égalisation dans le domaine fréquentiel sur la base du résultat du stade de contrôle; et
d. l'application (S222, S230) du type sélectionné d'égalisation au signal d'accès en porteuse unique avec multiplexage en fréquence, qui a été reçu pendant l'opération de réception ;
e. dans lequel le stade d'application est effectué avec itération jusqu'à ce qu'une vérification d'erreur soit passée ou jusqu'à ce que le nombre d'itérations ait dépassé un seuil défini à l'avance ;
f. dans lequel, si l'égalisation dans le domaine temporel est sélectionnée, l'égalisation dans le domaine fréquentiel est exécutée dans la première itération et l'égalisation dans le domaine temporel est exécutée dans d'autres itérations.

2. Procédé suivant la revendication 1, dans lequel les égalisations dans le domaine temporel et dans le domaine fréquentiel sont des techniques de turbo égalisation.

3. Procédé suivant la revendication 1 ou 2, dans lequel le au moins un critère défini à l'avance comprend comme premier critère un canal à évanouissement uniforme et comme deuxième critère un rapport signal à bruit en dessous d'un seuil défini à l'avance, dans lequel l'égalisation dans le domaine temporel est sélectionnée, lorsque le premier et le deuxième critères sont satisfaits, et dans lequel l'égalisation dans le domaine fréquentiel est sélectionnée, lorsqu'au moins le premier critère n'est pas satisfait.

4. Procédé suivant la revendication 3, dans lequel l'estimation de l'état du canal comprend l'estimation d'un étalement du temps de propagation et d'un rapport signal à bruit du canal.

5. Procédé suivant la revendication 4, dans lequel un critère de canal à évanouissement uniforme est considéré comme satisfait, lorsque l'inverse de l'étalement du temps de propagation estimé est inférieur à une sous-bande d'un utilisateur.

6. Procédé suivant la revendication 1, comprenant, en outre, utiliser une réaction de décision d'une turbo égalisation dans le domaine fréquentiel pour mettre à jour l'estimation dans le stade d'estimation.

7. Procédé suivant la revendication 6, comprenant, en outre, l'utilisation de la réaction de décision pour atténuer l'interférence résiduelle après l'égalisation dans le domaine fréquentiel.

8. Procédé suivant l'une quelconque des revendications précédentes, comprenant, en outre, l'utilisation d'un égalisateur à borne unique pour l'égalisation dans le domaine fréquentiel.

9. Procédé suivant l'une quelconque des revendications précédentes, comprenant, en outre, la réception de l'accès en porteuse unique avec multiplexage en fréquence par l'intermédiaire d'un agencement multi-entrée, multi-sortie, MIMO, multi-utilisateur et l'utilisation d'un détecteur MIMO pour effectuer une égalisation sélective dans le domaine temporel ou dans le domaine fréquentiel.

10. Dispositif de réception d'un signal d'accès en porteuse unique avec multiplexage fréquentiel, le dispositif comprenant :
a. des moyens (120) d'estimation de canal pour estimer un état de canal d'une liaison de transmission, par laquelle le signal d'accès en porteuse unique avec multiplexage en fréquence est reçu ;
b. des moyens (120) de contrôle pour contrôler si l'état du canal estimé satisfait au moins un critère défini à l'avance ;
c. des moyens (22, 24, 42, 44) de commutation pour sélectionner l'une d'une égalisation dans le domaine temporel et d'une égalisation dans le domaine fréquentiel en réaction à un signal de sortie des moyens (120) de contrôle ; et
d. des moyens (20, 40; 130) d'égalisation pour appliquer le type sélectionné d'égalisation au signal d'accès en porteuse unique avec multiplexage en fréquence, qui a été reçu pendant l'opération de réception ;
e. dans lequel le dispositif est conçu pour effectuer l'application avec itération jusqu'à ce qu'une vérification d'erreur soit passée ou jusqu'à ce que le nombre d'itérations a dépassé un seuil défini à l'avance ; et
f. dans lequel, si l'égalisation dans le domaine temporel est sélectionnée par les moyens (22, 24, 42, 44) de commutation, l'égalisation dans le domaine fréquentiel est exécutée par les moyens (20, 40; 130) d'égalisation dans la première itération et l'égalisation dans le domaine temporel est exécutée par les moyens (20, 40; 130) d'égalisation dans d'autres itérations

11. Dispositif suivant la revendication 10, dans lequel le dispositif est agencé sous la forme d'un récepteur multi-entrée, multi-sortie, MIMO.

12. Dispositif suivant la revendication 10 ou 11, dans lequel les moyens d'égalisation comprennent un détecteur (130) MIMO.

13. Dispositif d'accès à un réseau, comprenant un dispositif suivant l'une quelconque des revendications 10 à 12.

14. Produit de programme d'ordinateur, comprenant des moyens de code pour produire les stades de la revendication 1 de procédé, lorsqu'il passe sur un dispositif d'ordinateur.
